# EUROPÄISCHE PATENTSCHRIFT

(11) **EP 2 460 253 B1**
(45) Veröffentlichungstag und Bekanntmachung des Hinweises auf die Patenterteilung: **01.03.2017**
(21) Anmeldenummer: 10734948.2
(22) Anmeldetag: 09.07.2010
(51) Int. Cl.: H02J 7/34, H02J 1/08, B60R 16/03, H02J 1/00, F02N 11/08, H02J 7/14

(54) **SCHALTUNGSANORDNUNG FÜR EIN BORDNETZ**
CIRCUIT ARRANGEMENT FOR AN ON-BOARD SYSTEM
CIRCUIT POUR UN RÉSEAU DE BORD

(30) Priorität: 31.07.2009 DE 102009028147
(43) Veröffentlichungstag der Anmeldung: 06.06.2012
(73) Patentinhaber: Robert Bosch GmbH, 70442 Stuttgart (DE)
(72) Erfinder: PISCHKE, Ulf, 70569 Stuttgart (DE); DRAESE, Nils, 70439 Stuttgart (DE)
(86) Internationale Anmeldenummer: PCT/EP2010/059913
(87) Internationale Veröffentlichungsnummer: WO 2011/012428

(56) Entgegenhaltungen:
- EP-A1- 1 130 737
- EP-A1- 1 749 701
- WO-A1-03/099605
- DE-A1- 3 717 716
- DE-A1-102004 043 129
- DE-B3- 10 231 379
- US-A1- 2004 222 771

## Beschreibung

Die Erfindung betrifft eine Schaltungsanordnung für ein Bordnetz und ein Verfahren zum Betreiben eines Bordnetzes.

### Stand der Technik

Für Energiebordnetz-Topologien sind Varianten mit Multivoltage-Generatoren bzw. spannungsschaltbaren Generatoren und nachgeschalteten Doppelschichtkondensatoren (double layer capacitor, DLC) oder Superkondensatoren (ultra capacitor, UCAP) bekannt, die auf ein variables Spannungsniveau größer 14V, in der Regel 30 V bis 40V, ausgelegt sind.

Damit ist eine Steigerung der Peakleistungsfähigkeit des Energiebordnetzes, typischerweise zur Optimierung der Rückgewinnung von elektrischer Energie bzw. des Rekuperationsvermögens, möglich. Dies erfolgt durch Erhöhung der maximalen Generatorleistung bei höherer Spannung sowie Bereitstellung eines der genannten Kondensatoren als Rekuperationsspeicher mit erhöhter Fähigkeit zur Peakladungsaufnahme. Da ein Superkondensator eine sehr hohe Anzahl von seriellen Zellen aufweist, um die hohe Spannung zu erreichen, und ein DC/DC-Wandler zur Ankopplung des Haupt-Bordnetzes an das Leistungs-Bordnetz mit variabler Spannung zur Bereitstellung einer Leistung P in der Regel größer 1,5 kW ausgelegt ist, verursachen die genannten Module hohe Kosten.

Weiterhin besteht die Möglichkeit zur Ankopplung von Hochleistungsverbrauchern an ein Leistungs-Bordnetz eines derartigen Energiebordnetzes. Dies ist jedoch aufgrund der stark schwankenden Spannung, die vor der Rekuperation gering und danach hoch ist, mit Einschränkungen verbunden. Ebenso sind Topologie-Varianten bekannt, bei denen durch serielle Verschaltung eines Energiespeichers (z. B. eines Kondensators oder einer zweiter Batterie) in Reihe zur bereits vorhandenen Bordnetzbatterie eine höhere Spannung zur Versorgung von Hochleistungsverbrauchern bereitgestellt wird. Das Basis-Bordnetz des Energiebordnetzes mit einem Standard-Generator und weiteren Modulen wird durch diese Änderungen im Leistungs-Bordnetz nur geringfügig beeinflusst.

Zur Speisung des zusätzlichen Energiespeichers wird bei diesen Topologien in der Regel ein potentiattrennender DC/DC-Wandler eingesetzt. Folglich ergibt sich die Möglichkeit, Hochleistungsverbraucher mit einer erhöhten Spannung und minimierten Rückwirkungen auf das restliche Bordnetz, bspw. verursacht durch den Spannungseinbruch bei hoher Strombelastung, versorgen zu können. Der Mehraufwand zur Erzielung dieser singulären Funktion ist dabei jedoch relativ hoch.

Aus der Druckschrift DE 10 2004 043 129 A1 ist eine Vorrichtung zur Spannungsversorgung, insbesondere für ein Fahrzeugbordnetz, bekannt. Dabei ist eine als Starter-Generator betreibbare elektrische Maschine über einen Pulswech-selrichter und einen Wechselschalter mit der Batterie und dem Bordnetz verbun-den. Diese Verbindung wird über den Wechselschalter aufgetrennt, so dass ein Kondensator mit dem Pulswechselrichter verbunden ist. Der Starter-Generator kann sowohl im generatorischen als auch im motorischen Betrieb betrieben wer-den. Zusätzlich ist eine Rückspeisung von elektrischer Energie in die Batterie oder den Kondensator möglich, wenn mit Hilfe des Starter-Generators ein gene-ratorisches Abbremsen durchgeführt wird. Druckschrift US 2004/222771 A1 beschreibt einen Batterieschaltkreis für ein Kraftfahrzeug mit einer ersten Batteriengruppe sowie einer zweiten Batteriengruppe, die in Reihe geschaltet sind. Außerdem umfasst dieser Batterienschaltkreis einen bidirektionalen Gleichspannungswandler zum Übertragen von Energie zwischen den beiden Batteriegruppen.

Eine elektrische Maschine für ein Kraftfahrzeug beschrieben, die als Starter/Generator betrieben wird, ist aus der Druckschrift DE 102 31 379 B3 bekannt. Dabei wird diese elektrische Maschine beim Starten mit einer Spannung versorgt, die sich aus einer Addition oder Subtraktion von Spannungen ergibt, die an einem ersten und einem zweiten Energiespeicher anliegen. Ein in der Druckschrift WO 03/099605 A1 beschriebener Stand der Technik geht unter Nutzung der Priorität aus dem in der Druckschrift DE 102 31 379 B3 beschriebenen Stand der Technik hervorgeht.

### Offenbarung der Erfindung

Die Erfindung betrifft eine Schaltungsanordnung für ein Bordnetz bzw. ein Energiebordnetz, das ein Basis-Bordnetz mit einem Energiespeicher, der auch als erster Energiespeicher bezeichnet werden kann, ein Leistungs-Bordnetz mit einem zusätzlichen Energiespeicher, der auch als zweiter Energiespeicher bezeichnet werden kann, und einen DC/DC-Wandler umfasst, wobei die beiden Energiespeicher, d. h. der erste und der zweite Energiespeicher, in Reihe geschaltet sind. Der DC/DC-Wandler ist zur Kopplung zwischen dem Basis-Bordnetz und dem Leistungs-Bordnetz ausgebildet.

Somit umfasst das Bordnetz üblicherweise ein als Basis-Bordnetz ausgebildetes Teilbordnetz und ein als Leistungs-Bordnetz ausgebildetes Teilbordnetz. Der DC/DC-Wandler kann parallel zu mindestens einem der Energiespeicher geschaltet und zwischen den beiden Teilbordnetzen angeordnet sein. Der Generator kann als weitere Komponente parallel zu mindestens einem der Energiespeicher geschaltet sein. Bei Betrieb der Schaltungsanordnung kann mindestens einer der Energiespeicher von dem Generator mit elektrischer Energie versorgt werden. Außerdem ist der erste Energiespeicher bspw. als Batterie oder Akkumulator ausgebildet. Der zusätzliche bzw. zweite Energiespeicher ist bspw. als Kondensator (bspw. Doppelschichtkondensator, Superkondensator, Ultra Capacitor) oder als Akkumulator (bspw. Bleisäure-Speicher, Li-lonen-Speicher oder einem Speicher mit einer alternativen Speichertechnologie) ausgebildet. Jeweils ein Energiespeicher ist einem Teilbordnetz zugeordnet. Es kann vorgesehen sein, dass das Bordnetz auch als Teil der Schaltungsanordnung ausgebildet ist. In einer Anwendung sind die Schaltungsanordnung und das Bordnetz für ein Kraftfahrzeug vorgesehen.

In einer Variante der Schaltungsanordnung sind die beiden Energiespeicher, d. h. der erste Energiespeicher und der zusätzliche bzw. zweite Energiespeicher, über mindestens eine Schaltung mit dem Generator verbunden. Dabei sind in einem ersten Fall der erste Energiespeicher, üblicherweise die Batterie, und das Basis-Bordnetz über einen ersten Schalter mit dem Generator und der zusätzliche Energiespeicher sowie das Leistungs-Bordnetz über einen zweiten Schalter mit dem Generator verbunden. In einem zweiten Fall ist ein optionaler Kippschalter oder Wechselschalter vorgesehen, über den abwechselnd entweder der erste Energiespeicher (Batterie) und das Basis-Bordnetz oder der zusätzliche Energiespeicher (Kondensator) und das Leistungs-Bordnetz mit dem Generator zu verbinden sind. In einem dritten Falle entfällt der Schalter zwischen dem Generator und dem ersten Energiespeicher bzw. dem Basis-Bordnetz, d. h. der Generator ist fest mit dem zusätzlich bzw. zweiten Energiespeicher und demnach dem Leistungs-Bordnetz verbunden.

Der Gleichstromsteller bzw. DC/DC-Wandler kann üblicherweise als ein potentialfreier und/oder bidirektionaler DC/DC-Wandler ausgebildet sein. Über den DC/DC-Wandler ist zwischen den Teilbordnetzen Energie zu transferieren.

Die Schaltungsanordnung kann ein Modul zur Beeinflussung einer Richtung eines innerhalb des Basis-Bordnetzes fließenden Stroms aufweisen. Somit kann in bestimmten Betriebszuständen (bspw. einem Wiederstart) ein Stromfluss in bestimmte Bordnetzzweige (bspw. Starter) zu Lasten anderer Bordnetzkomponenten verhindert werden. Dieses Modul kann in dem DC/DC-Wandler integriert oder als separates Bauteil, bspw. als Schaltung mit einer gleichrichtenden Funktion bzw. Diodenfunktion oder Dioden-Charakteristik, ausgebildet sein.

Weiterhin ist ein Verfahren zum Betreiben eines Bordnetzes vorgesehen, wobei das Bordnetz ein Basis-Bordnetz mit einem Energiespeicher und ein Leistungs-Bordnetz mit einem zusätzlichen bzw. zweiten Energiespeicher sowie einen DC/DC-Wandler umfasst. Die beiden genannten Energiespeicher werden dabei in Reihe geschaltet. Eine Kopplung zwischen dem Basis-Bordnetz und dem Leistungs-Bordnetz erfolgt durch den DC/DC-Wandler.

Mit dem Verfahren können mindestens vier Betriebsfälle umgesetzt werden. Bei einem ersten, statischen Betriebsfall wird von dem DC/DC-Wandler Energie von dem Leistungs-Bordnetz in das Basis-Bordnetz transferiert. Bei einem zweiten Betriebsfall wird der Kondensator geladen. Bei einem dritten Betriebsfall wird, unter Umkehr einer Flussrichtung der Energie durch den DC/DC-Wandler, ein Ladestrom der Batterie bzw. des ersten Energiespeichers verringert und ein Ladestrom des Kondensators bzw. des zweiten Energiespeichers erhöht. In einem vierten Betriebsfall wird das Basis-Bordnetz mit Energie aus dem zweiten Energiespeicher und zur Entlastung des ersten Energiespeichers durch den DC/DC-Wandler gestützt. Die vier genannten Betriebsfälle oder Betriebsarten können für das Bordnetz abwechselnd durchgeführt werden.

Mit der Erfindung wird durch die vorgesehene Verschaltung der elektronischen Bauteile der Schaltungsanordnung, die eine Serienschaltung von Energiespeichern umfasst, eine kosten- und wirkungsgradoptimierte Topologie für ein Bordnetz bereitgestellt. Mit der Schaltungsanordnung kann u. a. die Forderung nach einer Erhöhung der Rekuperationsleistung zur Gewinnung elektrischer Energie, der Bereitstellung einer erhöhten Spannung für Hochleistungsverbraucher bei möglichst geringer Spannungsvariation und darüberhinaus auch eine Steigerung des Wirkungsgrads im Nicht-Rekuperationsbetrieb erfüllt werden. Somit ist die Realisierung einer Topologie für ein Energiebordnetz möglich, die bzgl. eines Verhältnisses zwischen Kosten und Leistungsfähigkeit (Performance) optimiert ist und Anforderungen an zukünftige Energiebordnetze abdecken kann.

Die Basis-Bordnetz-Batterie als Energiespeicher bzw. erster Energiespeicher, die i. d. R. Bleisäure aufweist, sowie der typischerweise als Superkondensator bzw. Li-lonen- oder Blei-Säure-Akkumulator ausgebildete zusätzliche Energiespeicher können als Baueinheit oder als zwei getrennte Komponenten in unterschiedlichen Baurräumen im Fahrzeug angeordnet sein. Verbraucher des Leistungs- und des Basis-Bordnetzes werden aus den verschiedenen Spannungsebenen, die regelmäßig durch die beiden Energiespeicher der Schaltungsanordnung bereitgestellt werden, heraus gespeist.

Bei der Weiterentwicklung von Topologievorschlägen durch die spezielle Verschaltung des DC/DC-Wandlers ist auch bei hohen Bordnetzlasten nur eine geringe Leistung des DC/DC-Wandlers erforderlich. Außerdem kann ein zusätzlicher Mehrnutzen für den Start/Stopp-Betrieb generiert werden. Mit der im Rahmen der Erfindung vorgesehenen Verschaltung des DC/DC-Wandlers ist es möglich, dessen Größe zu minimieren. Außerdem ist mit der vorgesehenen Energieversorgung der Teilbordnetze auch eine Reduktion des Treibstoffverbrauchs möglich.

Die vorliegende Erfindung stellt in Ausgestaltung eine Schaltungstopologie und Betriebsstrategie dar, mit der sich bei optimiertem Aufwand mehrere Sparansätze erfüllen lassen. Dabei ergibt sich u. a. eine Erhöhung der Generatorspannung zur Steigerung des Generatorwirkungsgrads. Im Schubbetrieb, wenn mindestens einer der elektrischen Energiespeicher geladen wird, kann ein Rekuperationspotential erhöht werden, um die gespeicherte Energie später zur Unterstützung des Bordnetzes zu nutzen. Eine Bordnetzstützung im Start/Stopp-Betrieb ist ebenfalls möglich. Somit wird beim Wiederstart des Motors nach einer roten Ampel der Spannungseinbruch, den der Starter erzeugt, auf der Bordnetzseite vom DC/DC-Wandler ausgeglichen. Die Erfüllungen von möglichen Forderungen bzgl. eines Schutzes gegen Verpolung der Basis-Bordnetz-Batterie ist mit der Erfindung ebenfalls möglich. Weiterhin kann eine Versorgung von Hochstromverbrauchern auf einem höheren Spannungspotential erreicht werden. Mit der Erfindung kann ein Topologieansatz für ein wirkungsgradoptimiertes Kfz-Bordnetz realisiert werden.

Die beschriebene Schaltungsanordnung ist dazu ausgebildet, sämtliche Schritte des vorgestellten Verfahrens durchzuführen. Dabei können einzelne Schritte dieses Verfahrens auch von einzelnen Komponenten der Schaltungsanordnung durchgeführt werden. Weiterhin können Funktionen der Schaltungsanordnung oder Funktionen von einzelnen Komponenten der Schaltungsanordnung als Schritte des Verfahrens umgesetzt werden. Außerdem ist es möglich, dass Schritte des Verfahrens als Funktionen einzelner Komponenten der Schaltungsanordnung oder der gesamten Schaltungsanordnung realisiert werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind.

### Kurze Beschreibung der Zeichnungen

Figur 1 zeigt in schematischer Darstellung ein erstes aus dem Stand der Technik bekanntes Bordnetz für ein Kraftfahrzeug.
Figur 2 zeigt in schematischer Darstellung ein zweites aus dem Stand der Technik bekanntes Bordnetz für ein Kraftfahrzeug.
Figur 3 zeigt in schematischer Darstellung eine erste Ausführungsform einer erfindungsgemäßen Schaltungsanordnung für ein Bordnetz in drei verschiedenen Betriebsfällen.
Figur 4 zeigt in schematischer Darstellung eine zweite Ausführungsform einer erfindungsgemäßen Schaltungsanordnung für ein Bordnetz.
Figur 5 zeigt in schematischer Darstellung eine dritte Ausführungsform einer erfindungsgemäßen Schaltungsanordnung für ein Bordnetz.

### Ausführungsformen

Die Erfindung ist anhand von Ausführungsformen in den Zeichnungen schematisch dargestellt und wird nachfolgend unter Bezugnahme auf die Zeichnungen ausführlich beschrieben.

Die Figuren werden zusammenhängend und übergreifend beschrieben, gleiche Bezugszeichen bezeichnen gleiche Komponenten.

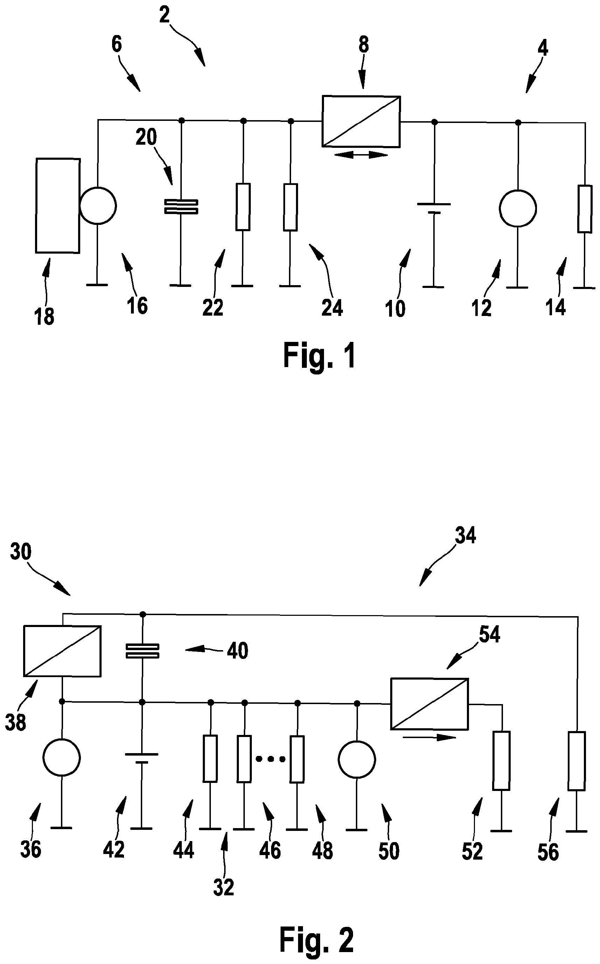

Das in Figur 1 schematisch dargestellte, aus dem Stand der Technik bekannte Bordnetz 2 umfasst ein Haupt-Bordnetz 4, das für eine Betriebsspannung von 14 V ausgelegt ist, und ein Leistungs-Bordnetz 6, das hier für eine Betriebsspannung von 14 V bis 42 V ausgelegt ist. Das Haupt-Bordnetz 4 und das Leistungs-Bordnetz 6 sind über einen DC/DC-Wandler 8 miteinander verbunden.

Bei dem vorliegenden Bordnetz 2 ist vorgesehen, dass das Haupt-Bordnetz 4 eine Batterie 10, einen Starter 12 und weitere Verbraucher 14 aufweist. Das Leistungs-Bordnetz 6 umfasst einen Generator 16, dem eine Regelungseinrichtung 18 zugeordnet ist, einen Superkondensator 20 sowie einen ersten zur Lenkung vorgesehenen Hochleistungsverbraucher 22 und einen zweiten zum Heizen ausgebildeten Hochleistungsverbraucher 24.

Figur 2 zeigt in schematischer Darstellung ein zweites, aus dem Stand der Technik bekanntes Bordnetz 30, dass ebenfalls ein Haupt-Bordnetz 32, das für eine Betriebsspannung von 14 V ausgelegt ist, und ein Leistungs-Bordnetz 34, das für eine Betriebsspannung größer 14 V ausgelegt ist, aufweist. Dieses Bordnetz 30 umfasst weiterhin einen Generator 36, einen potentialtrennenden DC/DC-Wandler 38, die in Reihe geschaltet sind, sowie einen Superkondensator 40. Das Haupt-Bordnetz 32 weist als Komponenten eine Batterie 42, mehrere Verbraucher 44, 46, 48, einen Starter 50 sowie einen weiteren Sonderverbraucher 52 auf, der über einen zusätzlichen DC/DC-Wandler 54 mit den übrigen Komponenten des Haupt-Bordnetzes 32 verbunden ist. Das Leistungs-Bordnetz 34 umfasst den Superkondensator 40 und einen Hochleistungsverbraucher 56, der hier als ein Modul einer elektronischen Servolenkung ausgebildet ist.

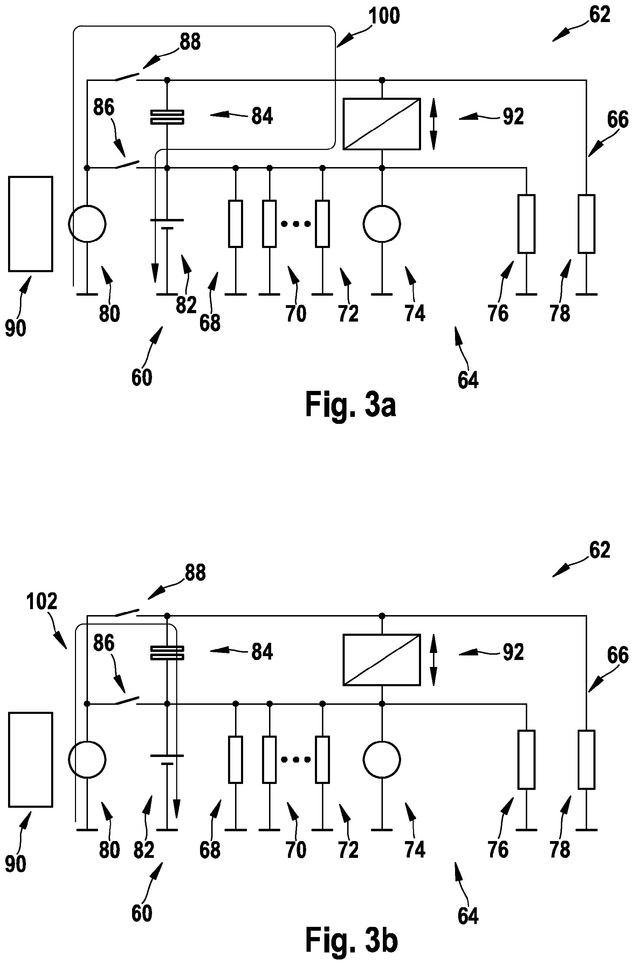

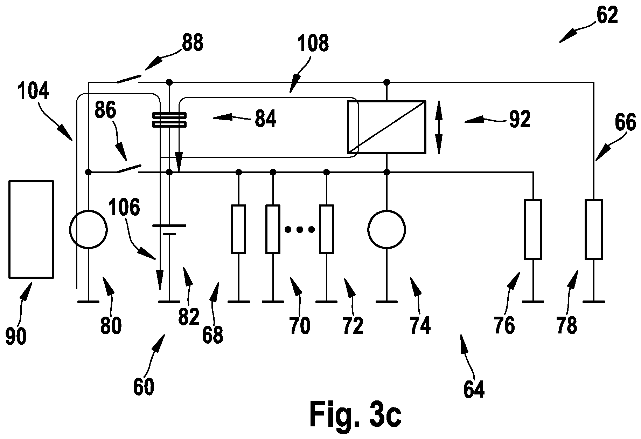

In Figur 3 ist in schematischer Darstellung eine erste Ausführungsform einer erfindungsgemäßen Schaltungsanordnung 60 gezeigt. Dabei zeigt Figur 3a diese Schaltungsanordnung 60 in einem ersten Betriebsfall, Figur 3b die Schaltungsanordnung 60 in einem zweiten Betriebsfall und Figur 3c die Schaltungsanordnung 60 in einem dritten Betriebsfall.

Die in Figur 3 dargestellte Schaltungsanordnung 60 weist eine erste Ausführungsform eines Bordnetzes 62 auf, das wiederrum ein Basis-Bordnetz 64 und ein Leistungs-Bordnetz 66 unterteilt ist. Das Basis-Bordnetz 64 umfasst mehrere Verbraucher 68, 70, 72, wobei hiervon lediglich drei derartige Verbraucher 68, 70, 72 dargestellt sind, einen Starter 74 sowie einen Sonderverbraucher 76. Das Leistungs-Bordnetz 66 umfasst hier einen Hochleistungsverbraucher 78. Das Leistungsbordnetz 66 könnte jedoch auch mit mehreren Verbrauchern bzw. ohne einen Verbraucher ausgestaltet sein.

Als weitere Komponenten der hier vorgestellten Ausführungsform der Schaltungsanordnung 60 sind ein Generator 80, ein erster Energiespeicher, der hier als Batterie 82 ausgebildet ist, und ein zweiter bzw. zusätzlicher Energiespeicher, der hier als Kondensator 84, typischerweise Superkondensator bzw. UCAP, ausgebildet ist, vorgesehen. Eine Schaltung weist hier einen ersten Schalter 86 und einen zweiten Schalter 88 auf. Eine Kontrolleinrichtung 90, ist zum Kontrollieren und somit zum Steuern und/oder zum Regeln der Schaltungsanordnung 60 ausgebildet. Dabei sind die Batterie 82 sowie der Kondensator 84 und somit beide Energiespeicher in Reihe geschaltet. Zwischen dem Basis-Bordnetz 64 und dem Leistungs-Bordnetz 66 ist als zusätzliche Komponente ein DC/DC-Wandler 92 geschaltet.

In der beschriebenen Ausführungsform der Schaltungsanordnung 60 ist die Batterie 82 dem Basis-Bordnetz 64 und der Superkondensator 84 dem Leistungs-Bordnetz 66 zugeordnet. Der Kondensator 84 ist parallel zu dem DC/DC-Wandler 92 geschaltet. Der potentialtrennende DC/DC-Wandler 92 ist zur Ladungssymmetrierung der beiden Energiespeicher ausgebildet.

Weiterhin ist bei der Schaltungsanordnung 60 das Basis-Bordnetz 64 für eine Betriebsspannung von 14 V und das Leistungs-Bordnetz 66 für einen Betrieb bei einer Spannung größer 14 V ausgelegt. Der Generator 80 weist eine erhöhte Nennspannung auf und kann demnach auch als ein sogenannter Multivoltage-Generator 80 bezeichnet werden. Mit diesem Generator 80 werden die Batterie 82 und der Kondensator 84 mit einem erhöhten Wirkungsgrad gespeist. Ein Betriebsmanagement ist im Rahmen einer Ausführungsform des erfindungsgemäßen Verfahrens zum Betreiben des Bordnetzes 62 vorgesehen und durch die Kontrolleinrichtung 90 umzusetzen. Dabei erfolgt bspw. eine Umschaltung der Spannungslage des Generators 80 auf einen geeigneten Spannungswert und demnach von einem Betriebspunkt des Generators 80 in Abhängigkeit einer Stellung der beiden Schalter 86, 88, wobei mindestens einer der beiden Energiespeicher mit Energie versorgt wird.

Im normalen Betrieb ist der zweite Schalter 88 geschlossen und der erste Schalter 86 geöffnet. Der Generator 80 speist eine erhöhte Spannung in das Leistungs-Bordnetz 66 ein, dabei werden der üblicherweise als UCAP ausgebildete Kondensator 84 und die Batterie 82, die in Serie geschaltet sind, gleichermaßen geladen. Aufgrund der erhöhten Spannung ist der Wirkungsgrad der Energieerzeugung gesteigert. Demnach kann aufgrund der erhöhten Leistungsabgabe eine kleinere Generatorbauform mit geringerem Gewicht und geringeren Kosten eingesetzt werden.

Bei dem in Figur 3a exemplarisch dargestellten ersten Betriebsfall ist ein Fluss der Energie durch die Linie 100 angedeutet. In diesem ersten Betriebsfall, der auch als statischer Betriebsfall bezeichnet wird, fließt die Energie ausgehend von dem Generator 80 bei geöffnetem ersten Schalter 86 über den geschlossenen zweiten Schalter 88 und den DC/DC-Wandler 92 zu der Batterie 82. Im ersten Betriebsfall ist der Kondensator 84 (UCAP) geladen. Durch den DC/DC-Wandler 92 wird Energie vom Leistungs-Bordnetz 66 in das Basis-Bordnetz 64 transferiert, somit wird vermieden, dass der Kondensator 84 überladen wird. In dem ersten Betriebsfall wird die komplette Leistung von dem DC/DC-Wandler 92 übernommen, der die Leistung am Kondensator 84 vorbeizieht.

Bei dem zweiten Betriebsfall, der exemplarisch in Figur 3b dargestellt ist, erfolgt ein Laden des Kondensators 84. Hierzu wird der DC/DC-Wandler 92 abgeschaltet. Ein Fluss der Energie ist in Figur 3b durch die Linie 102 angedeutet. Folglich fließt die Energie 102 ausgehend von dem Generator 80 über den zweiten Schalter 88 zu dem Kondensator 84 und nachfolgend zu der Batterie 82.

Bei einer Umsetzung des dritten durch Figur 3c schematisch gezeigten Betriebsfalls wird ein sogenannter Peakleistungsbetrieb umgesetzt. Dabei ist bspw. bei einer Rekuperation vorgesehen, kurzzeitig viel Energie in den beiden Energiespeichern zu speichern. Ein Fluss der Energie ist bei diesem Betriebsfall in Figur 3c durch die Linie 104 dargestellt, die in zwei Teillinien 106, 108 verzweigt ist. In diesem dritten Betriebsfall fließt die Energie ausgehend von dem Generator 80 über den zweiten geschlossenen Schalter 88 zu dem Kondensator 84. Wie durch die erste Teillinie 106 angedeutet, fließt nur ein erster Teil der Energie nach Passieren des Kondensators 84 zu der Batterie 82, damit diese nicht überladen wird. Ein zweiter Teil der Energie fließt, wie durch die Teillinie 108 angedeutet, ausgehend von dem Kondensator 84 über den DC/DC-Wandler 92 erneut zu dem Kondensator 84. Dadurch ergibt sich, dass der Kondensator 84 mit einer größeren Menge an Energie versorgt und somit geladen wird.

Um ein Überladen des Kondensators 84 zu vermeiden, wird ein DC/DC-Wandler 92 zwischen den Teilnetzen eingesetzt. Dabei dient der DC/DC-Wandler 92 dazu, im statischen Betrieb, sobald der Kondensator 84 seine Nennspannung erreicht hat, die Energie vom Leistung-Bordnetz 62 in das Basis-Bordnetz 64 zu transferieren. Wahlweise kann durch geeignete Umschaltung der Schalter 86, 88 eine Einstellung des gewünschten Ladezustands der beiden Energiespeicher erzielt werden. Zur Sicherstellung der Versorgung des Bordnetzes und zur Verbesserung des Wirkungsgrads kann es in bestimmten Betriebsfällen oder Betriebspunkten günstig sein, Energie des Generators 80 direkt in die 14 V-Ebene des Basis-Bordnetzes 64 einzuspeisen.

Um hierbei die Peakleistungsaufnahme des Bordnetzes 62 zu steigern sowie die Versorgung der Verbraucher im Leistungs-Bordnetz sicherzustellen, wird die Energie-Flussrichtung des DC/DC-Wandlers 92 umgedreht, so dass Energie vom Basis-Bordnetz 64 in das Leistungs-Bordnetz 66 transferiert wird. Dadurch ergibt sich eine Verringerung des Ladestroms der Batterie 82, in diesem Fall eines Blei-Akkumulators, der eine begrenzte Ladeakzeptanz aufweist, zugunsten einer Erhöhung des für den Kondensator 84 vorgesehenen Ladestroms, da dieser besser zur Aufnahme hoher Leistungen geeignet ist.

Im Rekuperationsbetrieb, wenn der zweite Schalter 88 geschlossen und der erste Schalter 86 geöffnet ist, kann ggf. die maximale Peakleistung durch die maximale Ladungsaufnahme der Batterie 82 im Basis-Bordnetz 82 insbesondere bei tiefen Temperaturen begrenzt werden. Durch Betrieb des DC/DC-Wandlers 92 kann unter Bereitstellung des Energieflusses von dem Basis-Bordnetz 64 in Richtung des Leistungs-Bordnetzes 66 eine Erhöhung der Rekuperationsleistung erzielt werden.

Mit der anhand von Figur 3 beschriebenen Topologie ergeben sich reduzierte Kosten für den Kondensator 84. Dieser muss nun weniger Zellen aufweisen, da er direkt auf 14 V-Ebene des Basis-Bordnetzes 64 aufgesetzt ist. Außerdem können gleichzeitig Hochleistungsverbraucher direkt aus dem Leistungs-Bordnetz 66 versorgt werden. Die Leistung des DC/DC-Wandlers 92 kann im Vergleich zu anderen Topologien sehr viel geringer gewählt werden. Falls eine gleichzeitige Ladung beider Energiespeicher erfolgt, ist der DC/DC-Wandler 92 nur zur Symmetrierung vorgesehen. Der erste Schalter 86 dient u. a. zur Sicherung der Schaltungsanordnung 60 und kann bei einem Störfall geschlossen werden.

Im Gegensatz zu den aus dem Stand der Technik bekannten Bordnetz 2 (Figur 1), bei dem die Spannung im Leistungs-Bordnetz 6 bei normalem Betrieb relativ gering eingestellt werden muss, da genügend Spielraum erhalten sein muss, um im Falle der Rekuperation die Energie im Superkondensator 20 aufnehmen zu können, kann bei der mit Figur 3 vorgeschlagenen Topologie im normalen Betrieb ein weitaus höheres und gleichmäßigeres Spannungsniveau am Generator 80 eingehalten und somit der Wirkungsgrad erhöht werden.

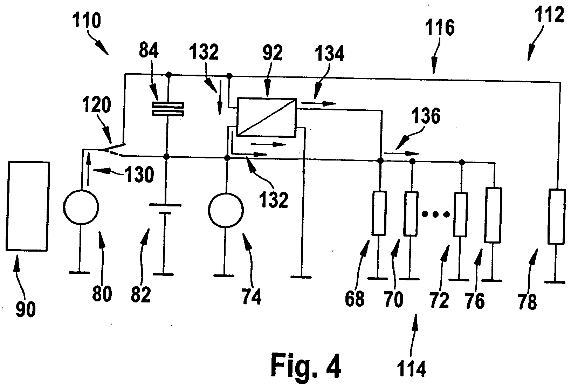

Die in Figur 4 schematisch dargestellte zweite Ausführungsform einer erfindungsgemäßen Schaltungsanordnung 110 umfasst ebenfalls einen Generator 80, zwei in Reihe geschaltete Energiespeicher, bspw. eine Batterie 82 und einen Kondensator 84, sowie ein Bordnetz 112, das wiederrum ein Basis-Bordnetz 114 und ein Leistungs-Bordnetz 116 umfasst. Dabei weist das Basis-Bordnetz 114 neben der Batterie 82 einen Starter 74 sowie diverse Verbraucher 68, 70, 72, 76 auf. Das Leistungs-Bordnetz 112 weist in der hier beschriebenen Ausführungsform den Kondensator 84 und einen oder mehrere Hochleistungsverbraucher 78 auf. Zwischen dem Basis-Bordnetz 114 und dem Leistungs-Bordnetz 116 ist ein isolierter DC/DC-Wandler 92 geschaltet. Aus Sicherheitsgründen und in speziellen Betriebsfällen kann durch einen optionalen Wechselschalter 120 die Generatorleistung direkt in das Basis-Bordnetz 114 eingespeist werden.

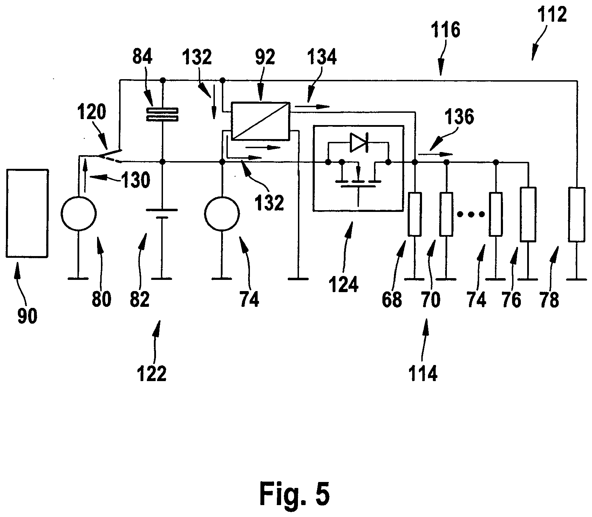

Die in Figur 5 schematisch dargestellte dritte Ausführungsform einer erfindungsgemäßen Schaltungsanordnung 122 unterscheidet sich von der in Figur 4 schematisch dargestellten zweiten Ausführungsform der Schaltungsanordnung 110 durch ein zusätzliches Bauteil, das hier als eine Schaltelement 124 mit Dioden-Charakteristik ausgebildet ist und innerhalb des Basis-Bordnetzes 114 zwischem dem Starter 74 und der Batterie 82 und den weiteren Verbrauchern 68, 70, 74, 76 geschaltet ist.

Bei den mit den Figuren 4 und 5 vorgestellten Bordnetztopologien ist der DC/DC-Wandler 92 dazu ausgebildet, die Potentialdifferenz der beiden Energiespeicher und somit der Batterie 82 bzw. Fahrzeugbatterie und dem Kondensator 84, der als Super- oder Doppelschichtkondensator ausgebildet sein kann, auszugleichen.

Die Reihenschaltung aus diesen beiden Energiespeichern wird über den Generator 80 gespeist. Bei gleicher Bordnetzleistung verglichen zu einem herkömmlichen Bordnetz sind dabei geringere Generatorströme nötig. Dies erhöht zum einen den Wirkungsgrad des Generators 80 um ca. 10 % in Abhängigkeit des Betriebspunkts und ermöglicht gegebenenfalls die Nutzung eines kleineren Generatormodells, z. B. mit einem Laststrom von 120 A statt 180 A. Dasselbe gilt auch für die Schaltungsanordnung 60 aus Figur 3.

Durch die spezielle Verschaltung des isolierten DC/DC-Wandlers 92 reduziert sich u. a. die benötigte Wandlerleistung zur Versorgung des Bordnetzes 114. Dabei fließt im statischen Betrieb der gesamte Generatorstrom 130 I_{G} (abzüglich des durch die Hochleistungsverbraucher 78 benötigten Stroms) durch die Primärseite des DC/DC-Wandlers 92 und danach zur Versorgung in das Basis-Bordnetz 114. Ein Primärstrom 132 I_{P} des DC/DC-Wandlers 92 trägt also unmittelbar zur Stromversorgung des Basis-Bordnetzes 114 bei. Die an der Primärseite (und dem zweiten Energiespeicher) anliegende Spannung und dieser Primärstrom 132 I_{P} werden innerhalb des DC/DC-Wandlers 92 in einen Sekundärstrom 134 I_{S} und eine Spannung übersetzt und versorgen damit ebenfalls das Basis-Bordnetz 114.

Um beispielsweise die Verbraucher des Basis-Bordnetzes 114 bei 14 V mit 2500 W zu versorgen, fließt ein Laststrom im Basis-Bordnetz 114 von 180 A. Wird der Generator 80 nun bei 22 V betrieben, sind ca. 120 A für den Generatorstrom 130 I_{G} ausreichend. Dieser Generatorstrom 130 I_{G} fließt als Primärstrom 132 I_{P} durch die Primärseite des isolierend aufgebauten DC/DC-Wandlers 92 und danach zur Versorgung in das Bordnetz 114.

Zusätzlich zu dem Primärstrom 132 I_{P} addiert sich der Sekundärstrom 134 I_{S} des DC/DC-Wandlers 92, die zusammen als Laststrom 136 I_{L} das Bordnetz 114 versorgen. Die benötigte Ausgangsleistung des DC/DC-Wandlers 92 ergibt sich dadurch zu (180 A-120 A)* 14 V = 840 W, um bspw. ein 2500 W Bordnetz zu versorgen.

Im Rekuperationsfall wird der DC/DC-Wandler 92 deaktiviert. Der Generatorstrom 130 I_{G} fließt dann durch den Kondensator 84 oberhalb der Batterie 82 und speichert so die Rekuperationsenergie ein. Die Generatorsollspannung wird in diesem Betrieb sukzessive erhöht, bis der gewünschte Generatorstrom 130 I_{G} erreicht ist. Durch den Einbau des bidirektionalen DC/DC-Wandlers 92 lässt sich die Rekuperationsleistung noch weiter steigern. In diesem Fall wird der Generatorstrom 130 I_{G} dann höher eingestellt, als zur Versorgung des Bordnetzes 122 und zum Laden der Batterie 82 nötig ist. Dieser zusätzliche Strom wird durch den rückwärts betriebenen DC/DC-Wandler 92 zusätzlich in den Kondensator 84 eingespeichert.

Zur Unterstützung des Basis-Bordnetzes 114 kann der DC/DC-Wandler 92 ergänzend eine Diodenfunktion oder alternativ einen Schalter 124 aufweisen, was in der Figur 5 gezeigt ist. Wenn beim Wiederstart die Spannung an der Batterie 82 einbricht, kann das Basis-Bordnetz 114 durch den DC/DC-Wandler 92 stabil ver-sorgt werden. Gegenüber aktuellen Bordnetzstabilisierungen wird die Batterie 82 in diesem Fall nicht durch das Basis-Bordnetz 114 belastet. Die Diodenfunktion stellt gleichzeitig einen Verpolschutz für die Komponenten des Basis-Bordnetzes 114 dar. Der am Generator 82 angebrachte Wechselschalter 120 ist optional und fungiert als Rückfallebende bei einem Ausfall des DC/DC-Wandlers 92 oder in ungünstigen Betriebsfällen.

Die in den Figuren 3, 4 und 5 gezeigten Ausführungsformen einer Schaltungsanordnung 62, 112 umfassen einen ersten Energiespeicher, der exemplarisch als Batterie 82 ausgebildet ist, sowie einen zweiten, zusätzlichen Energiespeicher, der hier exemplarisch als Kondensator 84 (Superkondensator) ausgebildet ist. Üblicherweise können in einer derartigen Schaltungsanordnung 62, 112 auch andere geeignete Energiespeicher eingesetzt werden. So ist es möglich, dass der erste Energiespeicher als Akkumulator oder Generator, bspw. Startergenerator oder Generator mit aktiver Boostfunktion bzw. Verstärkungsfunktion, ausgebildet ist. Für den zweiten Energiespeicher können u. a. unterschiedliche Typen von Kondensatoren 84, bspw. Doppelschichtkondensatoren, aber ggf. auch Akkumulatoren zum Einsatz kommen.

## Patentansprüche

1. Schaltungsanordnung für ein Bordnetz (62, 112), das ein Basis-Bordnetz (64, 114) mit einem ersten Energiespeicher, ein Leistungs-Bordnetz (66, 116) mit einem zusätzlichen zweiten Energiespeicher und einen isolierend aufgebauten DC/DC-Wandler (92) umfasst, wobei der erste Energiespeicher und der zweite Energiespeicher in Reihe geschaltet sind, wobei der isolierend aufgebaute DC/DC-Wandier (92) zur Kopplung zwischen dem Basis-Bordnetz (64, 114) und dem Leistungs-Bordnetz (66, 116) vorgesehen und parallel zu mindestens einem der Energiespeicher geschaltet ist, wobei die Schaltungsanordnung (60, 110, 122) eine Kontrolleinrichtung (90) zum Kontrollieren der Schaltungsanordnung (60, 110, 122) aufweist, die dazu ausgebildet ist, bei einem Peakleistungsbetrieb unter Umkehr einer Flussrichtung der Energie durch den isolierend aufgebauten DC/DC-Wandler (92) einen Ladestrom des ersten Energiespeichers zu verringern und einen Ladestrom des zweiten Energiespeichers zu erhöhen, wobei ein Generatorstrom (130) als Primärstrom (132) durch eine Primärseite des isolierend aufgebauten DC/DC-Wandlers (92) fließt, zu dem zusätzlich ein Sekundärstrom (134) des isolierend aufgebauten DC/DC-Wandlers (92) addiert wird, wobei der Primärstrom (132) und der Sekundärstrom (134) zusammen als Laststrom (136) das Basis-Bordnetz (64, 114) versorgen,
**dadurch gekennzeichnet, dass**
in dem Peakleistungsbetrieb nur ein erster Teil der Energie nach Passieren des zweiten Energiespeichers zu dem ersten Energiespeicher fließt, und dass ein zweiter Teil der Energie ausgehend von dem zweiten Energiespeicher über den DC/DC-Wandler (92) erneut zu dem zweiten Energiespeicher fließt.

2. Schaltungsanordnung nach Anspruch 1, die einen Generator (80) aufweist, der zu dem ersten Energiespeicher und dem zweiten Energiespeicher parallel geschaltet ist.

3. Schaltungsanordnung nach Anspruch 2, bei der der erste Energiespeicher und der zusätzliche zweite Energiespeicher über mindestens eine Schaltung mit dem Generator (80) verbunden sind.

4. Schaltungsanordnung nach einem der voranstehenden Ansprüche, bei der der zweite Energiespeicher als Doppelschichtkondensator ausgebildet ist.

5. Schaltungsanordnung nach einem der voranstehenden Ansprüche, die ein Modul zur Beeinflussung einer Richtung und eines Betrags eines durch den DC/DC-Wandler (92) fließenden Stroms aufweist.

6. Verfahren zum Betreiben eines Bordnetzes (62, 112), das ein Basis-Bordnetz (64, 114) mit einem ersten Energiespeicher, ein Leistungs-Bordnetz (66, 116) mit einem zusätzlichen zweiten Energiespeicher und einen isolierend aufgebauten DC/DC-Wandler (92) umfasst, wobei der erste Energiespeicher und der zweite Energiespeicher in Reihe geschaltet werden, wobei der isolierend aufgebaute DC/DC-Wandler (92) parallel zu mindestens einem der Energiespeicher geschaltet wird, wobei eine Kopplung zwischen dem Basis-Bordnetz (64, 114) und dem Leistungs-Bordnetz (66, 116) durch den isolierend aufgebauten DC/DC-Wandler (92) erfolgt, wobei bei einem Peakleistungsbetrieb unter Umkehr einer Flussrichtung der Energie durch den isolierend aufgebauten DC/DC-Wandler (92) ein Ladestrom des ersten Energiespeichers verringert und ein Ladestrom des zweiten Energiespeichers erhöht wird, und wobei ein Generatorstrom (130) als Primärstrom (132) durch eine Primärseite des isolierend aufgebauten DC/DC-Wandlers (92) fließt, zu dem zusätzlich ein Sekundärstrom (134) des isolierend aufgebauten DC/DC-Wandlers (92) addiert wird, wobei der Primärstrom (132) und der Sekundärstrom (134) zusammen als Laststrom (136) das Basis-Bordnetz (64, 114) versorgen,
**dadurch gekennzeichnet, dass**
in dem Peakleistungsbetrieb nur ein erster Teil der Energie nach Passieren des zweiten Energiespeichers zu dem ersten Energiespeicher fließt, und dass ein zweiter Teil der Energie ausgehend von dem zweiten Energiespeicher über den DC/DC-Wandler (92) erneut zu dem zweiten Energiespeicher fließt.

7. Verfahren nach Anspruch 6, bei dem in einem ersten, statischen Betriebsfall von dem DC/DC-Wandler (92) Energie von dem Leistungs-Bordnetz (66, 116) in das Basis-Bordnetz (64, 114) transferiert wird.

8. Verfahren nach Anspruch 6 oder 7, bei dem in einem zweiten Betriebsfall der zweite Energiespeicher geladen wird.

## Claims

1. Circuit arrangement for a vehicle power supply system (62, 112) that comprises a basic vehicle power supply system (64, 114) having a first energy store, a power vehicle power supply system (66, 116) having an additional second energy store and a DC/DC converter (92) of insulating design, wherein the first energy store and the second energy store are connected in series, wherein the DC/DC converter (92) of insulating design is provided for coupling between the basic vehicle power supply system (64, 114) and the power vehicle power supply system (66, 116) and connected in parallel with at least one of the energy stores, wherein the circuit arrangement (60, 110, 122) has a control device (90) for controlling the circuit arrangement (60, 110, 122), which is designed to reverse a direction of flow of the energy through the DC/DC converter (92) of insulating design during a peak power mode in order to decrease a charging current for the first energy store and to increase a charging current for the second energy store, wherein a generator current (130) flows as primary current (132) through a primary side of the DC/DC converter (92) of insulating design, to which additionally a secondary current (134) of the DC/DC converter (92) of insulating design is added, wherein the primary current (132) and the secondary current (134) together supply power to the basic vehicle power supply system (64, 114) as load current (136),
**characterized in that**
in the peak power mode, only a first portion of the energy flows to the first energy store after passing through the second energy store, and **in that** a second portion of the energy flows from the second energy store to the second energy store again via the DC/DC converter (92).

2. Circuit arrangement according to Claim 1, which has a generator (80) which is connected in parallel with the first energy store and the second energy store.

3. Circuit arrangement according to Claim 2, in which the first energy store and the additional second energy store are connected to the generator (80) via at least one circuit.

4. Circuit arrangement according to one of the preceding claims, in which the second energy store is in the form of a double-layer capacitor.

5. Circuit arrangement according to one of the preceding claims, which has a module for influencing a direction and an absolute value of a current flowing through the DC/DC converter (92).

6. Method for operating a vehicle power supply system (62, 112) that comprises a basic vehicle power supply system (64, 114) having a first energy store, a power vehicle power supply system (66, 116) having an additional second energy store and a DC/DC converter (92) of insulating design, wherein the first energy store and the second energy store are connected in series, wherein the DC/DC converter (92) of insulating design is connected in parallel with at least one of the energy stores, wherein a coupling between the basic vehicle power supply system (64, 114) and the power vehicle power supply system (66, 116) is effected by the DC/DC converter (92) of insulating design, wherein a direction of flow of the energy through the DC/DC converter (92) of insulating design is reversed during a peak power mode in order to decrease a charging current of the first energy store and to increase a charging current for the second energy store, and wherein a generator current (130) flows as primary current (132) through a primary side of the DC/DC converter (92) of insulating design, to which additionally a secondary current (134) of the DC/DC converter (92) of insulating design is added wherein the primary current (132) and the secondary current (134) together supply power to the basic vehicle power supply system (64, 114) as load current (136), **characterized in that**
in the peak power mode only a first portion of the energy flows to the first energy store after passing through the second energy store, and **in that** a second portion of the energy flows from the second energy store to the second energy store again via the DC/DC converter (92).

7. Method according to Claim 6, in which in a first static operating situation, the DC/DC converter (92) transfers energy from the power vehicle power supply system (66, 116) to the basic vehicle power supply system (64, 114).

8. Method according to Claim 6 or 7, in which in a second operating situation the second energy store is charged.

## Revendications

1. Arrangement de circuit pour un réseau de bord (62, 112), lequel comprend un réseau de bord de base (64, 114) doté d'un premier accumulateur d'énergie, un réseau de bord de puissance (66, 116) doté d'un deuxième accumulateur d'énergie supplémentaire et d'un convertisseur CC/CC (92) de construction isolante, le premier accumulateur d'énergie et le deuxième accumulateur d'énergie étant branchés en série, le convertisseur CC/CC (92) de construction isolante étant conçu pour être connecté entre le réseau de bord de base (64, 114) et le réseau de bord de puissance (66, 116) et étant branché en parallèle avec au moins l'un des accumulateurs d'énergie, l'arrangement de circuit (60, 110, 122) possédant un dispositif de contrôle (90) destiné à contrôler l'arrangement de circuit (60, 110, 122), lequel est conçu pour, dans un fonctionnement à puissance de crête, réduire un courant de charge du premier accumulateur d'énergie et augmenter un courant de charge du deuxième accumulateur d'énergie en inversant un sens de circulation de l'énergie à travers le convertisseur CC/CC (92) de construction isolante, un courant de générateur (130) circulant en tant que courant primaire (132) à travers un côté primaire du convertisseur CC/CC (92) de construction isolante, auquel est en plus ajouté un courant secondaire (134) du convertisseur CC/CC (92) de construction isolante, le courant primaire (132) et le courant secondaire (134) alimentant ensemble le réseau de bord de base (64, 114) en tant que courant de charge (136),
**caractérisé en ce que**
dans le fonctionnement à puissance de crête, seule une première partie de l'énergie circule vers le premier accumulateur d'énergie après être passée par le deuxième accumulateur d'énergie, et **en ce qu'**une deuxième partie de l'énergie émanant du deuxième accumulateur d'énergie circule de nouveau vers le deuxième accumulateur d'énergie par le biais du convertisseur CC/CC (92).

2. Arrangement de circuit selon la revendication 1, lequel possède un générateur (80) qui est branché en parallèle avec le premier accumulateur d'énergie et le deuxième accumulateur d'énergie.

3. Arrangement de circuit selon la revendication 2, avec lequel le premier accumulateur d'énergie et le deuxième accumulateur d'énergie supplémentaire sont reliés au générateur (80) par le biais d'au moins un circuit.

4. Arrangement de circuit selon l'une des revendications précédentes, dans lequel le deuxième accumulateur d'énergie est réalisé sous forme de condensateur à double couche.

5. Arrangement de circuit selon l'une des revendications précédentes, lequel possède un module destiné à influence une direction et une valeur d'un courant qui circule à travers le convertisseur CC/CC (92).

6. Procédé pour faire fonctionner un réseau de bord (62, 112), lequel comprend un réseau de bord de base (64, 114) doté d'un premier accumulateur d'énergie, un réseau de bord de puissance (66, 116) doté d'un deuxième accumulateur d'énergie supplémentaire et d'un convertisseur CC/CC (92) de construction isolante, le premier accumulateur d'énergie et le deuxième accumulateur d'énergie étant branchés en série, le convertisseur CC/CC (92) de construction isolante étant branché en parallèle avec au moins l'un des accumulateurs d'énergie, une connexion entre le réseau de bord de base (64, 114) et le réseau de bord de puissance (66, 116) étant effectuée par le convertisseur CC/CC (92) de construction isolante, un courant de charge du premier accumulateur d'énergie étant réduit et un courant de charge du deuxième accumulateur d'énergie étant augmenté dans un fonctionnement à puissance de crête en inversant un sens de circulation de l'énergie à travers le convertisseur CC/CC (92) de construction isolante, et un courant de générateur (130) circulant en tant que courant primaire (132) à travers un côté primaire du convertisseur CC/CC (92) de construction isolante, auquel est en plus ajouté un courant secondaire (134) du convertisseur CC/CC (92) de construction isolante, le courant primaire (132) et le courant secondaire (134) alimentant ensemble le réseau de bord de base (64, 114) en tant que courant de charge (136),
**caractérisé en ce que**
dans le fonctionnement à puissance de crête, seule une première partie de l'énergie circule vers le premier accumulateur d'énergie après être passée par le deuxième accumulateur d'énergie, et **en ce qu'**une deuxième partie de l'énergie émanant du deuxième accumulateur d'énergie circule de nouveau vers le deuxième accumulateur d'énergie par le biais du convertisseur CC/CC (92).

7. Procédé selon la revendication 6, avec lequel,
dans une première situation de fonctionnement statique, de l'énergie est transférée du réseau de bord de puissance (66, 116) dans le réseau de bord de base (64, 114) par le convertisseur CC/CC (92).

8. Procédé selon la revendication 6 ou 7, avec
lequel, dans une deuxième situation de fonctionnement, le deuxième accumulateur d'énergie est chargé.
